# FASCICULE DE BREVET EUROPEEN

(11) **EP 2 323 067 B1**
(45) Date de publication et mention de la délivrance du brevet: **25.05.2016**
(21) Numéro de dépôt: 10190078.5
(22) Date de dépôt: 05.11.2010
(51) Int. Cl.: G06F 21/62, G06F 21/77

(54) **Procédé sécurisé de traitement d'un contenu mémorisé au sein d'un composant, et composant correspondant**
Gesichertes Verfahren für die Verarbeitung eines gespeicherten Inhalts in einer Komponente, und entsprechende Komponente
Secured method for processing content stored within a component and corresponding component

(30) Priorité: 12.11.2009 FR 0957958
(43) Date de publication de la demande: 18.05.2011
(73) Titulaire: STMicroelectronics (Rousset) SAS, 13790 Rousset (FR)
(72) Inventeur: Marinet, Fabrice, 13790 CHATEAUNEUF LE ROUGE (FR); Lisart, Mathieu, 13100 AIX EN PROVENCE (FR)
(74) Mandataire: Zapalowicz, Francis

(56) Documents cités:
- EP-A1- 1 429 224
- EP-A2- 0 961 193
- US-A1- 2005 076 226
- US-B2- 7 237 121

## Description

L'invention concerne la sécurisation de contenus mémorisés au sein d'un composant, notamment mais non exclusivement dans le domaine des cartes à puce.

Actuellement, pour cloner ou émuler un produit sécurisé comme par exemple un circuit intégré d'une carte à puce, il est possible, avec un niveau moyen de temps, d'expérience, de nombre d'échantillons et un équipement adapté, d'effectuer une attaque physique invasive qui vise à lire physiquement le contenu encrypté d'une mémoire, par exemple une mémoire morte, de façon à en extraire une valeur protégée représentative d'un code confidentiel par exemple, et à effectuer une opération d'ingénierie inverse (« Reverse engineering » en langue anglaise) du circuit logique d'encryptage/décryptage noyé dans un ensemble logique communément désigné par l'homme du métier sous la dénomination de « glue logique ».

Il devient alors possible d'obtenir le code confidentiel en clair.

Et, ceci peut s'appliquer également à des mémoires vives (mémoires RAM) dont le contenu peut être lu électriquement (par exemple au moyen d'un équipement basé sur la méthode du contraste de potentiel).

La demande de brevet EP 0961193 décrit un système de traitement sécurisé comportant sur un circuit intégré une mémoire ROM inaccessible de l'extérieur et contenant un code d'amorçage ainsi qu'une clé publique permettant de vérifier la signature d'un système d'exploitation temps réel contenu dans une partie d'une autre mémoire du type FLASH EPROM.

Selon un mode de mise en oeuvre et de réalisation, il est proposé un procédé et un composant permettant de renforcer la protection du composant contre un attaquant qui désirerait cloner ou émuler un tel composant.

Différents aspects, modes de mise en oeuvre et de réalisation de l'invention sont définis dans les revendications.

Selon un aspect, il est proposé un procédé sécurisé de traitement d'un contenu mémorisé au sein d'un composant ; le composant comprend une première mémoire, par exemple une mémoire ROM ou une mémoire RAM, et une mémoire non volatile, par exemple une mémoire électriquement programmable et effaçable (mémoire EEPROM) ou bien une mémoire du type FLASH ; le contenu d'une première partie de la première mémoire à été modifié avec une première entité, et le contenu d'une deuxième partie de la première mémoire a été modifié avec une deuxième entité.

Le terme « modifié » doit être compris ici dans un sens très large englobant notamment un encryptage et/ou une opération de mélange communément désignée par l'homme du métier sous le vocable anglosaxon de « scrambling ».

De même, la notion « d'entité » doit également être prise dans un sens très large, englobant notamment une clé de cryptage et/ou une clé de mélange (« scrambling key ») qui pourront être utilisées respectivement avec des opérations de cryptage/décryptage et de mélange/mélange inverse. Une entité peut être également formée de bits dont une partie peut être utilisée en tant que bits de configuration d'un circuit logique configurable et dont une autre partie peut former une clé de cryptage utilisable comme paramètre d'entrée de la fonction de cryptage/décryptage mise en oeuvre par le circuit logique configuré par les bits de configuration.

Dans le procédé selon cet aspect, on stocke ladite première entité, par exemple une première clé de cryptage/décryptage, de façon secrète dans le composant, et on stocke une information d'entité représentative de ladite deuxième entité, par exemple une deuxième clé de cryptage/décryptage, dans ladite mémoire non volatile à un endroit désigné par une première indication contenue dans ladite première partie de la première mémoire.

Selon un mode de mise en oeuvre,
- on effectue sur le contenu modifié de la première partie de la première mémoire un traitement de modification inverse, par exemple un traitement de décryptage, en utilisant ladite première entité, puis, après obtention de ladite première indication avec ledit traitement de modification inverse, on obtient ladite deuxième entité, par exemple la deuxième clé de cryptage/décryptage, à partir de ladite information d'entité contenue dans la mémoire non volatile et,
- on effectue sur le contenu modifié de la deuxième partie de la première mémoire un traitement de modification inverse en utilisant ladite deuxième entité.

Ainsi, selon cet aspect, on prévoit de stocker des informations importantes, par exemple une clé de cryptage, dans un troisième élément, à savoir une mémoire non volatile. Et, si par exemple un code confidentiel est mémorisé de façon cryptée dans la deuxième partie de la première mémoire, par exemple une mémoire ROM, et ce, avec la deuxième clé de cryptage qui est elle-même stockée dans la mémoire non volatile, l'attaquant devra effectuer une attaque invasive physique sur trois éléments au lieu de deux dans l'art antérieur, à savoir sur la première mémoire, sur la mémoire non volatile, et sur la logique de décryptage.

La protection du composant est par conséquent renforcée.

Par ailleurs, la protection est également renforcée par le fait que le contenu de la première mémoire est crypté avec deux clés différentes, la deuxième clé n'étant elle-même pas contenue dans cette mémoire mais dans une autre mémoire, à savoir la mémoire non volatile, et dont l'endroit (l'adresse ou les adresses) est désigné par une indication cryptée par la première clé et contenue dans la première mémoire.

En outre, cette protection contre des attaques éventuelles est encore plus efficace lorsque la mémoire non volatile est une mémoire non volatile au moins électriquement programmable, par exemple une mémoire EPROM, et de préférence une mémoire électriquement programmable et effaçable comme une mémoire EEPROM ou une mémoire FLASH.

En effet, une attaque physique invasive d'une mémoire non volatile au moins électriquement programmable, et tout particulièrement une mémoire EEPROM ou une mémoire FLASH, est extrêmement difficile et complètement différente d'une attaque physique d'une mémoire ROM.

Selon un mode de mise en oeuvre, ladite information d'entité peut être la deuxième entité elle-même. En d'autres termes, dans ce cas, la deuxième entité, par exemple clé de cryptage/décryptage, est stockée en clair, c'est-à-dire d'une façon non cryptée, dans la mémoire non volatile.

En variante, ladite information d'entité peut être la deuxième entité modifiée avec la première entité. En d'autres termes, ladite information d'entité, qui est stockée dans la mémoire non volatile, est dans ce cas par exemple la deuxième clé cryptée avec la première clé. Dans un tel mode de mise en oeuvre, qui est plus robuste au niveau sécurité que le précédent, après avoir obtenu ladite première indication, on effectue sur ladite information d'entité modifiée un traitement de modification inverse en utilisant la première entité de façon à obtenir ladite deuxième entité.

En d'autres termes, dans le cas où les entités sont des clés de cryptage, après avoir obtenu la première indication, c'est-à-dire l'indication de l'endroit où est stockée l'information de clé dans la mémoire non volatile, on décrypte la deuxième clé stockée de façon cryptée dans la mémoire non volatile, à l'aide de la première clé de façon à obtenir la deuxième clé en clair.

Dans un mode de mise en oeuvre encore plus sécuritaire, on peut prévoir que la mémoire non volatile possède une première partie dans laquelle on stocke ladite information d'entité (c'est-à-dire par exemple la deuxième clé en clair ou la deuxième clé cryptée) et une deuxième partie dont le contenu a été modifié avec une troisième entité, par exemple une troisième clé de cryptage. On stocke alors dans la deuxième partie de la première mémoire, la troisième entité modifiée avec ladite deuxième entité (par exemple la troisième clé cryptée avec la deuxième clé) et après avoir effectué sur ladite troisième entité modifiée un traitement de modification inverse (par exemple un décryptage) en utilisant la deuxième entité (par exemple la deuxième clé de cryptage) on effectue sur le contenu modifié de la deuxième partie de la mémoire non volatile un traitement de modification inverse (par exemple avec un traitement de décryptage) en utilisant la troisième entité (par exemple la troisième clé de cryptage).

Ainsi, dans ce mode de mise en oeuvre, la troisième clé de cryptage qui permet de décrypter la deuxième partie de la mémoire non volatile, contenant par exemple des données hautement sécuritaires, ne se trouve pas dans la mémoire non volatile elle-même, mais dans la première mémoire sous forme cryptée à l'aide de la deuxième clé qui elle non plus ne se situe pas dans la première mémoire mais dans la mémoire non volatile. On réalise donc ici une sorte de stockage croisé des clés dans les deux mémoires et dont l'une au moins (la troisième clé de cryptage) est stockée elle-même de façon cryptée avec une autre clé de cryptage.

L'une au moins des entités peut comporter une clé de cryptage et le traitement de modification inverse associé comporte un traitement de décryptage.

En variante, au lieu d'utiliser un outil de cryptage proprement dit, on peut utiliser un traitement de mélange (« scrambling »). Dans ce cas, l'une au moins des entités peut comporter une clé de mélange et le traitement de modification inverse associé comporte un traitement de mélange inverse.

Bien entendu, les deux modes de mise en oeuvre ne sont pas incompatibles. Ainsi, l'un au moins des contenus peut avoir été à la fois crypté avec une clé de cryptage et mélangé avec une clé de mélange, et le traitement de modification inverse associé comporte alors un traitement de décryptage et un traitement de mélange inverse. L'ordre de ces traitements est l'inverse de l'ordre des traitements de cryptage et de mélange.

Selon un autre aspect, il est proposé un composant, comprenant
- une première mémoire comportant une première partie possédant un contenu modifié avec une première entité de modification et une deuxième partie possédant un contenu modifié avec une deuxième entité,
- un moyen de stockage configuré pour stocker la première entité de façon secrète,
- une mémoire non volatile stockant une information d'entité représentative de la deuxième entité à un endroit désigné par une première indication contenue dans ladite première partie de la première mémoire.

Selon un mode de réalisation, le composant comporte :
- des premiers moyens de traitement aptes à effectuer un traitement de modification inverse sur le contenu modifié de la première partie de la première mémoire,
- des deuxièmes moyens de traitement aptes à effectuer un traitement de modification inverse sur le contenu de la deuxième partie de la première mémoire,
- des moyens de commande aptes à activer d'abord les premiers moyens de traitement avec la première entité, puis pour obtenir, après traitement de modification inverse sur ladite première indication avec ladite première entité, la deuxième entité à partir de ladite information d'entité contenue dans une mémoire non volatile et pour activer les deuxièmes moyens de traitement avec la deuxième entité.

Ladite information d'identité peut être la deuxième entité ou bien la deuxième entité modifiée avec la première entité.

Dans ce dernier cas, et selon un mode de réalisation, le composant comprend en outre des moyens de traitement auxiliaires structurellement identiques aux premiers moyens de traitement et aptes à effectuer un traitement de modification inverse sur ladite information d'entité, et les moyens de commande sont en outre aptes à, après avoir obtenu ladite première indication, activer les moyens de traitement auxiliaires avec la première entité de façon à obtenir ladite deuxième entité.

Bien que les premier et deuxième moyens de traitement puissent être structurellement différents, en pratique, et pour des raisons de simplicité de réalisation, ils sont de préférence structurellement identiques.

Selon un mode de réalisation permettant en particulier un stockage croisé des entités, la mémoire non volatile comporte une première partie stockant ladite information d'entité, et une deuxième partie possédant un contenu modifié avec une troisième entité, la deuxième partie de la première mémoire stockant la troisième entité modifiée avec ladite deuxième entité ; le composant comprend en outre des troisièmes moyens de traitement aptes à effectuer un traitement de modification inverse sur le contenu modifié de la deuxième partie de la mémoire non volatile, et les moyens de commande sont en outre aptes à activer les troisièmes moyens de traitement avec la troisième entité délivrée par les deuxièmes moyens de traitement.

Là encore, pour des raisons de simplicité, les troisièmes moyens de traitement sont généralement structurellement identiques aux premiers et deuxièmes moyens de traitement, bien qu'ils puissent être différents.

Selon un mode de réalisation, l'une au moins des entités comporte une clé de cryptage et le moyen de traitement associé est configuré pour mettre en oeuvre un algorithme de décryptage à clé, par exemple un algorithme du type DES ou AES.

Selon un autre mode de réalisation, l'une au moins des entités comporte une clé de cryptage et le moyen de traitement associé comporte un circuit logique structurellement configurable à l'aide d'au moins une partie de la clé de cryptage.

Un tel mode de réalisation permet en particulier d'effectuer le décryptage en un cycle d'horloge d'un signal d'horloge délivré à une unité de traitement embarquée dans le composant.

Selon un autre mode de réalisation, l'une au moins des entités comporte une clé de mélange et le moyen de traitement associé comporte un circuit additionnel configuré pour effectuer une opération de mélange inverse.

Bien entendu, comme indiqué ci avant, l'une au moins des entités peut comporter une clé de cryptage et une clé de mélange et dans ce cas les moyens de traitement associés comportent à la fois un circuit apte à effectuer un décryptage et un circuit additionnel apte à effectuer une opération de mélange inverse.

Selon un mode de réalisation particulièrement robuste du point de vue sécuritaire, la mémoire non volatile est une mémoire du type électriquement programmable et effaçable ou une mémoire du type FLASH.

Selon un autre aspect, il est proposé une carte à puce contenant un composant tel que défini ci avant.

D'autres avantages et caractéristiques de l'invention apparaîtront à l'examen de la description détaillée de modes de mise en oeuvre et de réalisation, nullement limitatifs, et des dessins annexés, sur lesquels :
- la figure 1 illustre de façon schématique un mode de réalisation d'un composant selon l'invention ;
- les figures 2 à 6 illustrent schématiquement un mode de mise en oeuvre d'un procédé selon l'invention ;
- la figure 7 illustre schématiquement un autre mode de réalisation et de mise en oeuvre de l'invention ;
- les figures 8 à 10 illustrent plus en détail mais toujours schématiquement des exemples de structures de moyens de traitement d'un composant selon l'invention ;
- la figure 11 illustre schématiquement un autre mode de réalisation d'un composant selon l'invention ;
- les figures 12 à 15 illustrent schématiquement un autre mode de mise en oeuvre d'un procédé selon l'invention ; et
- la figure 16 illustre schématiquement un mode de réalisation d'une carte à puce selon l'invention.

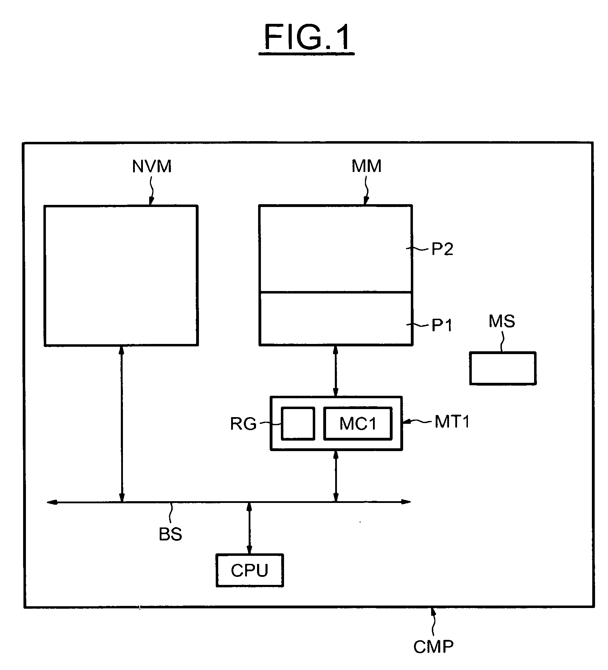

Selon la figure 1, la référence CMP désigne un composant électronique réalisé par exemple sous la forme d'un circuit intégré, et comportant une première mémoire MM, par exemple une mémoire morte (mémoire ROM) ou bien une mémoire vive (mémoire RAM).

Cette première mémoire comporte une première partie P1 et une deuxième partie P2.

Le composant comporte également une mémoire non volatile NVM, par exemple une mémoire EEPROM.

Il est également prévu un moyen de stockage MS, par exemple des registres, destinés, comme on le verra ci après, à stocker de façon secrète, c'est-à-dire par exemple en dur, une première entité telle qu'une première clé de cryptage/décryptage.

Le composant comporte également des premiers moyens de traitement MT1, dont on reviendra plus en détail ci après sur la structure et la fonctionnalité, couplés entre la mémoire MM et un bus BS sur lequel est également connectée une unité de traitement, telle qu'un microprocesseur ou un microcontrôleur, CPU. L'unité CPU peut incorporer un module logiciel de commande apte à activer les moyens de traitement MT1.

La mémoire non volatile NVM est également reliée au bus BS de sorte que l'ensemble de ces éléments CPU, NVM, MM peuvent échanger des informations.

D'une façon générale, le contenu de la première partie P1 de la mémoire MM a été modifié avec une première entité et le contenu de la deuxième partie P2 de la première mémoire a été modifié avec une deuxième entité.

Dans le mode de réalisation et de mise en oeuvre qui va maintenant être décrit, on suppose, à des fins de simplification, que la modification résulte d'un cryptage, la première entité étant alors une clé de cryptage K1 et la deuxième entité une clé de cryptage K2. Dans ce cas, les moyens de traitement MT1 sont aptes à effectuer un traitement de décryptage et comportent un registre RG destiné à stocker la clé de décryptage (qui est également la clé de cryptage) et des moyens de calcul MC1 aptes par exemple à mettre en oeuvre un algorithme de décryptage, par exemple du type AES (Advanced Encryption Standard) ou DES (Data Encryption Standard).

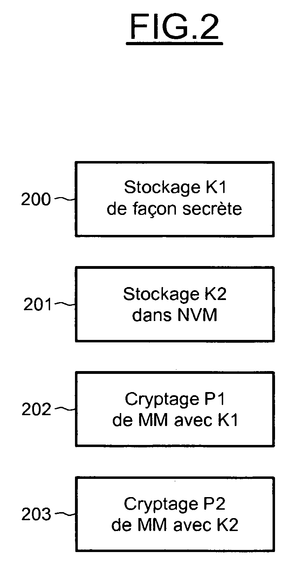

Si l'on se réfère maintenant à la figure 2, on voit que la clé K1 a été stockée de façon secrète (étape 200) dans le moyen de stockage MS. Il s'agit par exemple d'un stockage en dur dans un moyen de mémoire protégé, tel qu'un ou des registres par exemple. La valeur de la clé K1 peut être également par exemple la valeur secrète de réinitialisation d'un registre protégé.

Par ailleurs, la clé K2 a été stockée dans un endroit de la mémoire non volatile NVM (étape 201).

Et, comme indiqué ci avant, le contenu de la première partie P1 de la mémoire MM a été crypté avec la clé K1 (étape 202) tandis que le contenu de la deuxième partie P2 de la mémoire MM a été crypté avec la clé K2 (étape 203).

La deuxième partie P2 de la mémoire MM peut comporter des données utilisateur sécurisées, par exemple un code confidentiel.

La première partie P1 de la mémoire MM comporte quant à elle des instructions d'amorçage (« boot » en langue anglaise) de façon à permettre au dispositif de démarrer lors de la mise sous tension du composant.

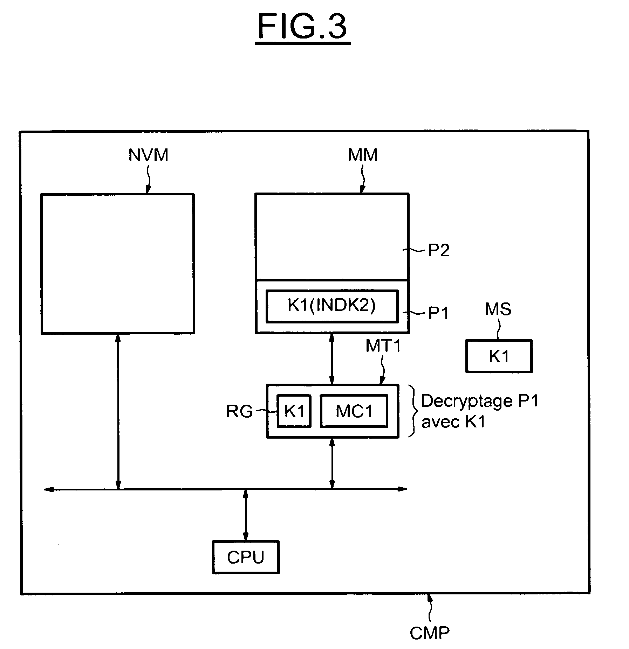

Ainsi, comme illustré sur la figure 3, lors de la mise sous tension du composant, les moyens de décryptage MC1 utilisent la clé K1, que l'on a représenté ici dans le registre RG, et commencent à décrypter le contenu de la partie P1 de la mémoire MM avec la clé K1.

Dans cette partie P1 de la mémoire MM, a été stockée, cryptée par la clé K1, une indication INDK2 désignant l'endroit dans la mémoire non volatile NVM, où est stockée la deuxième clé K2.

D'une façon générale, cet endroit peut être une adresse ou éventuellement plusieurs adresses, contiguës ou non, de la mémoire NVM. En effet, la clé K2 peut être stockée à une adresse précise ou bien à plusieurs adresses différentes dans le cas par exemple où cette clé est constituée de plusieurs octets.

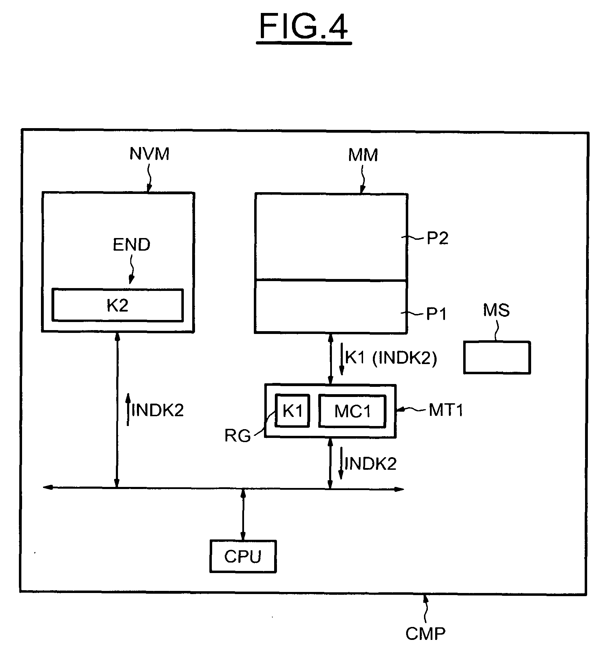

Lorsque l'indication cryptée K1(INDK2) est décryptée par les premiers moyens de traitement MT1, cette indication INDK2 permet à l'unité de traitement CPU (figure 4) d'adresser la mémoire non volatile NVM à l'adresse désignée par cette indication INDK2.

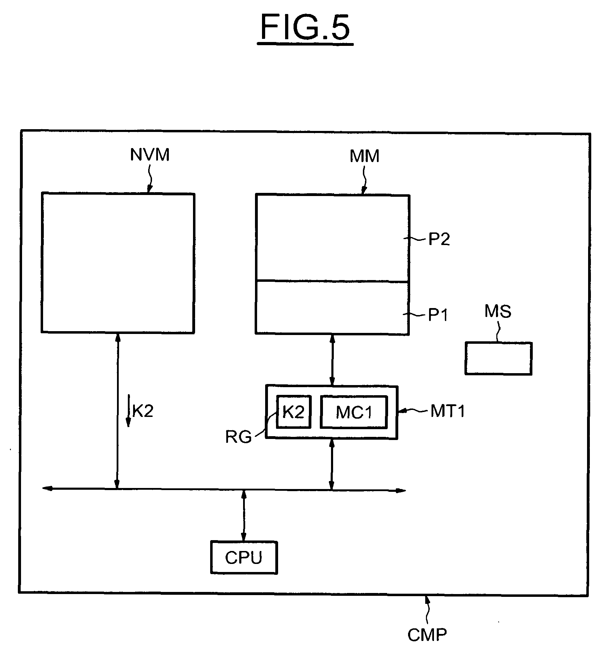

De ce fait, la clé K2 stockée à l'endroit END désigné par l'adresse INDK2 est extraite de la mémoire NVM (figure 5) pour être stockée in fine dans le registre RG des premiers moyens de traitement MT1.

En fait, sur la figure 5, on n'a représenté à des fins de simplification qu'un seul registre RG. En pratique, on peut prévoir de stocker la clé K2 dans un registre temporaire de façon que le processeur CPU puisse éventuellement continuer à extraire des données de la première partie P1 de la mémoire par l'intermédiaire des moyens MT1 utilisant la clé K1 lors du transfert de la clé K2. Et, ce n'est simplement que lorsque tous les octets de la clé K2 auront été stockés dans le registre temporaire que la clé K2 pourra remplacer la clé K1 dans le registre RG de façon à permettre aux moyens de traitement de basculer sur la clé K2.

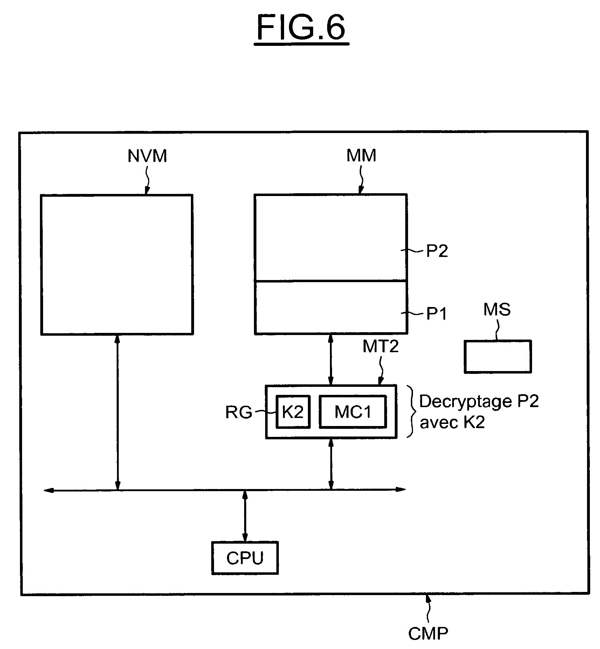

Ceci est illustré sur la figure 6 et les moyens de traitement deviennent alors des deuxièmes moyens de traitement MT2 décryptant le contenu de la deuxième partie P2 de la mémoire MM avec la clé K2.

Bien qu'il soit possible d'utiliser des moyens de traitement MT2 différents des moyens de traitement MT1 qui ont été utilisés avec la clé K1, en pratique, et pour des raisons de simplification, les deuxièmes moyens de traitement MT2 sont structurellement identiques aux premiers moyens de traitement MT1. En d'autres termes, les moyens de décryptage MC1 mettent en oeuvre le même algorithme mais avec une clé différente.

Dans le mode de mise en oeuvre qui vient d'être décrit, la clé K2 est stockée en clair dans la mémoire NVM.

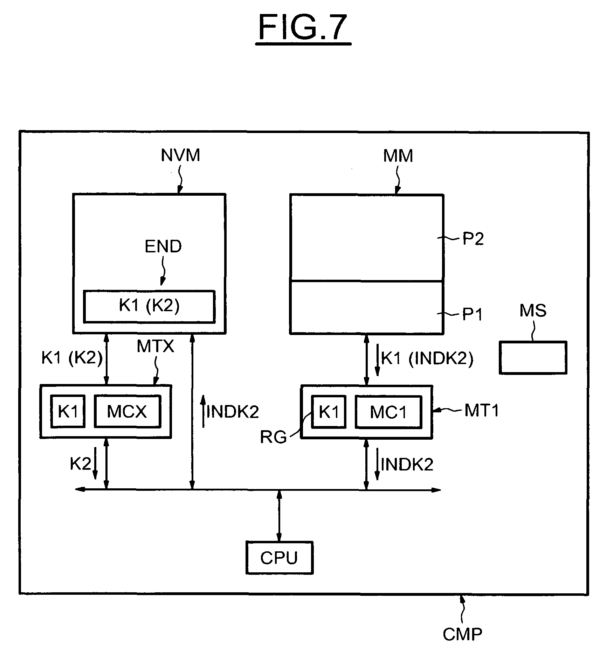

On pourrait également envisager, comme illustré schématiquement sur la figure 7, que cette clé K2 soit stockée sous forme cryptée par la clé K1 à l'endroit END.

Dans ce cas, il est prévu par exemple des moyens de traitement auxiliaires MTX, structurellement identiques aux premiers moyens de traitement MT1 et comportant à cet égard des moyens de décryptage auxiliaires MCX associés à un registre contenant la clé K1.

Ainsi, lors de l'adressage de la mémoire NVM par l'indication INDK2 qui a été décryptée par les premiers moyens de traitement MT1, la valeur cryptée K1(K2) de la clé K2 est extraite de la mémoire NVM et décryptée par les moyens de traitement auxiliaires MTX utilisant la clé K1 de façon à obtenir en clair la clé K2 qui, comme expliqué précédemment, sera stockée in fine dans le registre RG pour permettre le décryptage de la partie P2 de la mémoire MM.

Un tel mode de mise en oeuvre et de réalisation est plus sécuritaire puisque la clé K2 est stockée cryptée dans la mémoire NVM.

Dans le mode de réalisation qui vient d'être décrit, les moyens de traitement MT1 comportaient des moyens de décryptage aptes à mettre en oeuvre un algorithme de décryptage, par exemple du type AES ou DES. De tels moyens sont plus robustes au niveau sécuritaire, par contre, ils nécessitent plusieurs cycles d'horloge du signal d'horloge cadençant l'unité CPU, pour effectuer le décryptage des données.

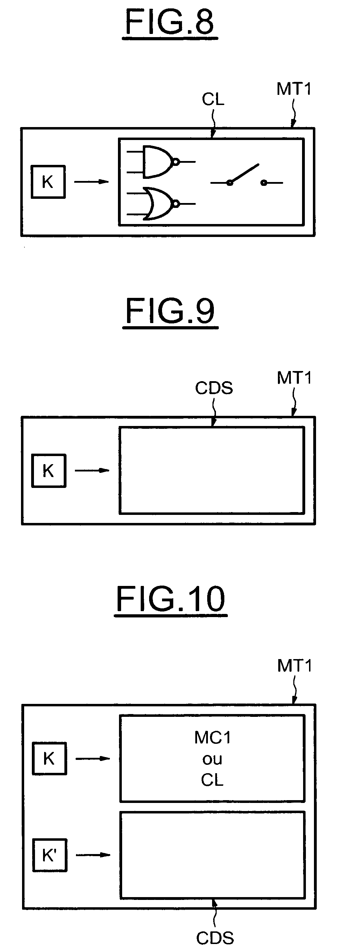

Aussi, dans certaines applications, il est envisageable d'utiliser comme illustré sur la figure 8, des moyens de traitement MT1, capables également d'effectuer un décryptage à partir d'une clé de cryptage/décryptage K, mais utilisant au lieu d'un algorithme de décryptage, un circuit logique CL composé de portes logiques et d'interrupteurs. Un tel circuit CL est par conséquent configurable, c'est-à-dire que sa structure logique peut être modifiée, à partir des bits de la clé de cryptage/décryptage K. Les bits de la clé K sont alors communément appelés bits de configuration.

De tels moyens de traitement permettent cette fois-ci d'effectuer un décryptage d'une donnée en un cycle du signal d'horloge.

En variante le circuit CL peut être configuré de façon à mettre en oeuvre une fonction logique de cryptage/décryptage utilisant une clé spécifique comme paramètre d'entrée. Dans ce cas une partie des bits de la clé K peut être utilisée comme bits de configuration du circuit CL et les bits restants de la clé K peuvent former ladite clé spécifique.

Ce qui vient d'être décrit pour du cryptage/décryptage, peut s'appliquer également pour du mélange (« scrambling ») et une opération de mélange inverse (« descrambling »). Dans ce cas, les entités ne sont plus des clés de cryptage/décryptage mais des clés de mélange. On rappelle ici qu'une opération de mélange d'un mot numérique consiste à changer l'ordre des bits de ce mot dans la mémoire. Dans une telle application, les moyens de traitement MT1 comportent cette fois-ci des moyens CDS (figure 9) aptes à effectuer une opération inverse de mélange en utilisant la clé de mélange K.

Il est également possible de combiner une opération de mélange et une opération de cryptage lors du stockage des contenus dans les différentes mémoires. En conséquence, lors de la lecture de ces contenus mémorisés, on effectuera une opération inverse de mélange et une opération de décryptage. Les moyens de traitement MT1 comportent alors, comme illustré sur la figure 10, des moyens de décryptage, par exemple du type de ceux référencés MC1 ou du type de ceux référencés CL, utilisant une clé de cryptage/décryptage K et des moyens aptes à faire une opération inverse de mélange CDS, tels que ceux illustrés sur la figure 9, utilisant alors une clé de mélange K'.

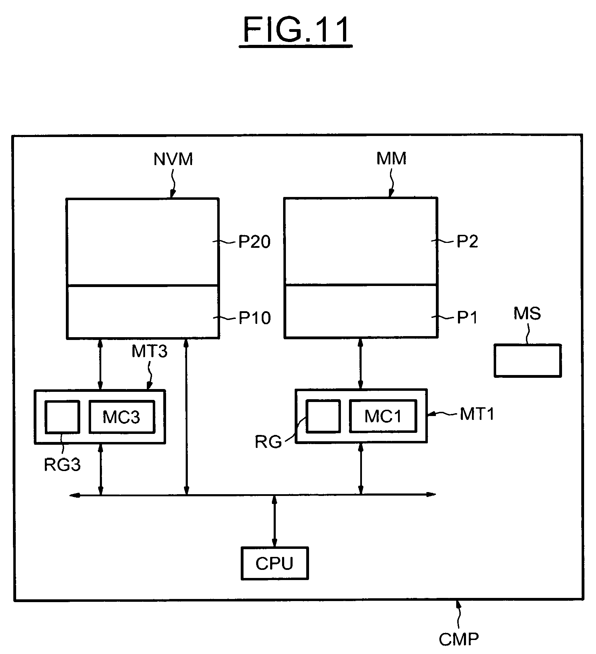

La figure 11 illustre un autre mode de réalisation possible d'un composant selon l'invention.

Par rapport à la structure illustrée sur la figure 1, le composant comporte ici en outre des troisièmes moyens de traitement MT3 qui sont par exemple des moyens aptes à effectuer un décryptage à l'aide d'une clé de cryptage/décryptage stockée dans le registre RG3. Ces moyens MT3 peuvent être ainsi structurellement identiques aux moyens de traitement MT1.

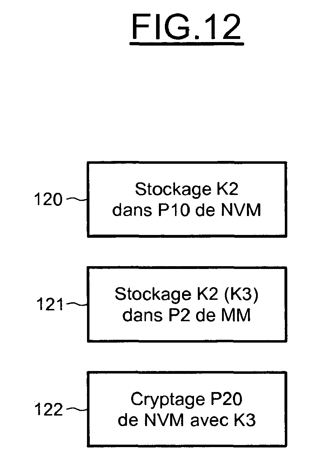

Dans ce mode de réalisation, la mémoire non volatile NVM comporte une première partie P10 dans laquelle a été stockée la clé K2 (étape 120, figure 12). Dans cet exemple de réalisation, la clé K2 est stockée en clair mais elle pourrait également être stockée cryptée avec la clé K1 comme indiqué ci avant.

Par ailleurs, la mémoire NVM comporte une deuxième partie P20 dont le contenu a été crypté avec une troisième clé de cryptage K3 (étape 122). Cette deuxième partie P20 peut comporter ainsi également des données sécuritaires pour l'utilisateur, comme par exemple, là encore, un code confidentiel.

La clé de cryptage K3 est stockée (étape 121, figure 12) sous forme cryptée avec la clé K2 dans la deuxième partie P2 de la mémoire MM.

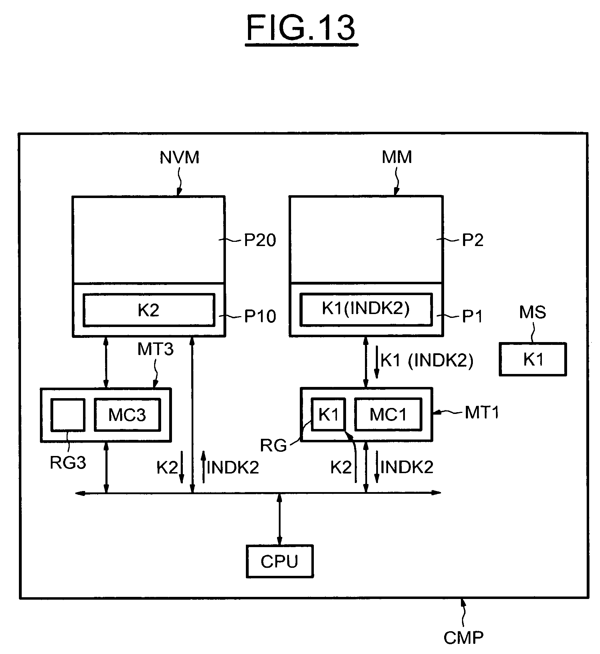

Ainsi, dans ce mode de mise en oeuvre, comme illustré sur la figure 13, lors de la mise sous tension du composant, les moyens de traitement MT1 commencent à décrypter le contenu de la partie P1 de la mémoire MM avec la clé K1. Puis, lors du décryptage de l'indication cryptée K1(INDK2), cette indication INDK2 permet à l'unité CPU d'adresser la première partie P10 de la mémoire NVM de façon à pouvoir en extraire la deuxième clé de cryptage K2 qui va être stockée in fine dans le registre RG des moyens de traitement MT1.

Puis, les moyens de traitement MT1 continuent alors à décrypter la deuxième partie P2 de la mémoire MM avec la clé K2.

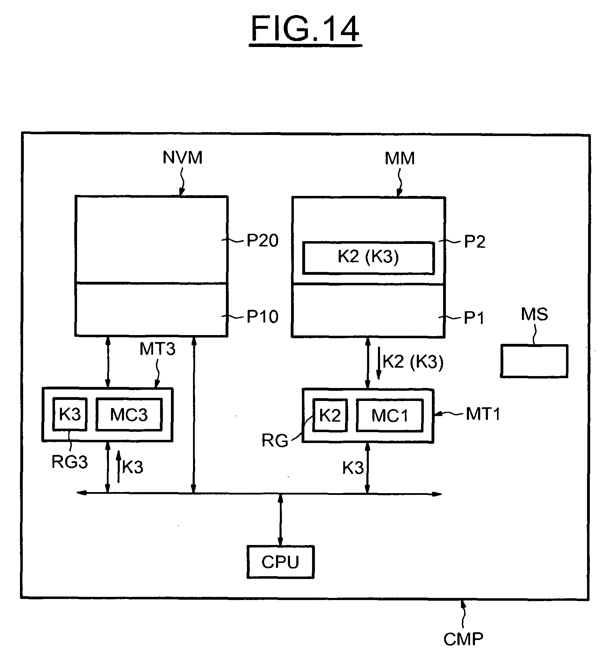

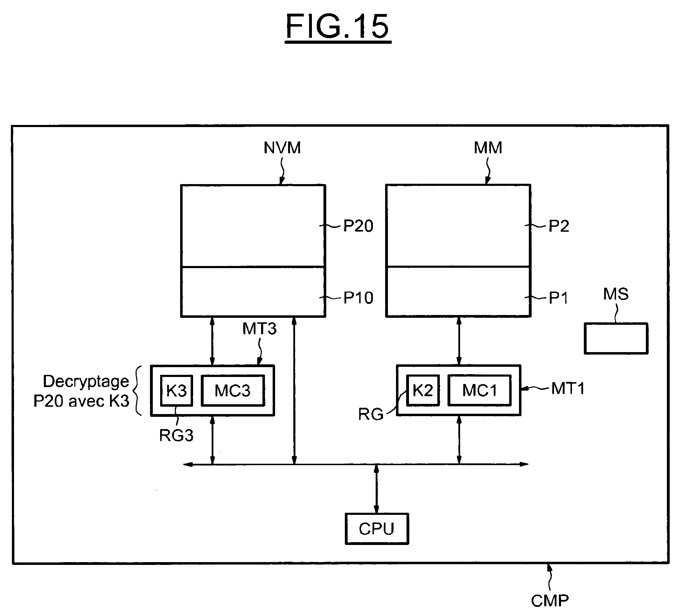

La clé K3 cryptée avec la clé K2 est alors décryptée par les moyens de traitement MT1 (figure 14) et la clé K3 est alors fournie aux moyens de traitement MT3, ce qui va permettre, comme illustré sur la figure 15, de décrypter le contenu de la partie P20 de la mémoire NVM avec cette clé K3.

On voit donc ici que l'on a un mode de réalisation et de mise en oeuvre hautement sécuritaire car il fait intervenir en particulier un stockage croisé de clés dans les deux mémoires MM et NVM avec qui plus est, certaines de ces clés cryptées.

En outre, lorsque la mémoire NVM est une mémoire EEPROM ou une mémoire FLASH, son attaque physique devient extrêmement difficile.

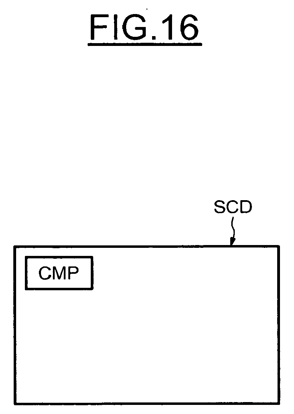

Un tel composant sécuritaire CMP peut être par exemple incorporé dans une carte à puce SCD (ou « smart card », en langue anglaise) comme illustré schématiquement sur la figure 16.

## Revendications

1. Procédé sécurisé de traitement d'un contenu mémorisé au sein d'un composant, le composant comprenant une première mémoire (MM) et une mémoire non volatile (NVM), le contenu d'une première partie (P1) de la première mémoire (MM) comportant des instructions d'amorçage et ayant été modifié selon un traitement de modification utilisant une première entité (K1) et incluant un encryptage et/ou une opération de mélange, la première entité incluant une clé de cryptage et/ou une clé de mélange et/ou des bits de configuration d'un circuit logique configurable, et le contenu d'une deuxième partie (P2) de la première mémoire (MM) ayant été modifié selon un traitement de modification utilisant une deuxième entité (K2) et incluant un encryptage et/ou une opération de mélange, la deuxième entité incluant une clé de cryptage et/ou une clé de mélange et/ou des bits de configuration d'un circuit logique configurable, procédé dans lequel on stocke (200) ladite première entité (K1) de façon secrète en dur dans un ou des registres du composant, on stocke une information d'entité (K2) représentative de ladite deuxième entité (K2) dans ladite mémoire non volatile (NVM) à un endroit (END) désigné par une première indication (INDK2) contenue dans ladite première partie de la première mémoire, et dans lequel on effectue, lors de la mise sous tension du composant, sur le contenu modifié de la première partie (P1) de la première mémoire (MM) un traitement de modification inverse en utilisant ladite première entité (K1), puis après obtention de ladite première indication (INDK2) avec ledit traitement de modification inverse, on obtient ladite deuxième entité (K2) à partir de ladite information d'entité contenue dans la mémoire non volatile et on effectue sur le contenu modifié de la deuxième partie (P2) de la première mémoire (MM) un traitement de modification inverse en utilisant ladite deuxième entité (K2).

2. Procédé selon la revendication 1, dans lequel ladite information d'entité est la deuxième entité (K2).

3. Procédé selon la revendication 1, dans lequel ladite information d'entité est la deuxième entité modifiée avec la première entité (K1, (K2)), et après avoir obtenu ladite première indication, on effectue sur ladite information d'entité modifiée (K1 (K2)) un traitement de modification inverse en utilisant la première entité (K1) de façon à obtenir ladite deuxième entité (K2).

4. Procédé selon l'une des revendications précédentes, dans lequel la mémoire non volatile (NVM) possède une première partie (P10) dans laquelle on stocke ladite information d'entité (K2), et une deuxième partie (P20) dont le contenu a été modifié avec une troisième entité (K3), la troisième entité incluant une clé de cryptage et/ou une clé de mélange et/ou des bits de configuration d'un circuit logique configurable, et on stocke dans la deuxième partie (P2) de la première mémoire (MM) la troisième entité modifiée avec ladite deuxième entité (K2 (K3)).

5. Procédé selon la revendication 4, dans lequel après avoir effectué sur ladite troisième entité modifiée (K2 (K3)) un traitement de modification inverse en utilisant la deuxième entité (K2), on effectue sur le contenu modifié de la deuxième partie (P20) de la mémoire non volatile (NVM) un traitement de modification inverse en utilisant la troisième entité (K3).

6. Procédé selon l'une des revendications précédentes, dans lequel l'une au moins des entités comporte une clé de cryptage (K1, K2, K3) et le traitement de modification inverse associé comporte un traitement de décryptage.

7. Procédé selon l'une des revendications précédentes, dans lequel l'une au moins des entités comporte une clé de mélange (K1) et le traitement de modification inverse associé comporte un traitement de mélange inverse.

8. Procédé selon les revendications 6 et 7, dans lequel l'un au moins des contenus a été à la fois crypté avec une clé de cryptage (K) et mélangé avec une clé de mélange (K'), et le traitement de modification inverse associé comporte un traitement de décryptage et un traitement de mélange inverse.

9. Composant, comprenant une première mémoire (MM) comportant une première partie (PI) possédant un contenu comportant des instructions d'amorçage et modifié selon un traitement de modification utilisant une première entité (K1) et incluant un encryptage et/ou une opération de mélange, la première entité incluant une clé de cryptage et/ou une clé de mélange et/ou des bits de configuration d'un circuit logique configurable, et une deuxième partie (P2) possédant un contenu modifié selon un traitement de modification utilisant une deuxième entité (K2) et incluant un encryptage et/ou une opération de mélange, la deuxième entité incluant une clé de cryptage et/ou une clé de mélange et/ou des bits de configuration d'un circuit logique configurable, un ou des registres (MS) configurés pour stocker en dur la première entité (K1) de façon secrète, une mémoire non volatile (VNM) stockant une information d'entité représentative de la deuxième entité (K2) à un endroit (END) désigné par une première indication (INDK2) contenue dans ladite première partie de la première mémoire, le composant comprenant en outre des premiers moyens de traitement (MT1) aptes à effectuer, lors de la mise sous tension du composant, un traitement de modification inverse sur le contenu modifié de la première partie de la première mémoire, des deuxièmes moyens de traitement (MT2) aptes à effectuer un traitement de modification inverse sur le contenu de la deuxième partie de la première mémoire, des moyens de commande (CPU) configurés pour activer d'abord les premiers moyens de traitement (MT1) avec la première entité, puis pour obtenir, après traitement de modification inverse sur ladite première indication avec ladite première entité (K1), la deuxième entité (K2) à partir de ladite information d'entité contenue dans une mémoire non volatile et pour activer les deuxièmes moyens de traitement (MT2) avec la deuxième entité.

10. Composant selon la revendication 9, dans lequel ladite information d'entité est la deuxième entité (K2).

11. Composant selon la revendication 9, dans lequel ladite information d'entité est la deuxième entité (K2) modifiée avec la première entité (K1), le composant comprenant en outre des moyens de traitement auxiliaires (MTX) structurellement identiques aux premiers moyens de traitement et aptes à effectuer un traitement de modification inverse sur ladite information d'entité, et les moyens de commande (CPU) sont en outre aptes à, après avoir obtenu ladite première indication, activer les moyens de traitement auxiliaires avec la première entité (K1) de façon à obtenir ladite deuxième entité (K2).

12. Composant selon l'une des revendications 9 à 11, dans lequel les premier et deuxième moyens de traitement (MT1, MT2) sont structurellement identiques.

13. Composant selon l'une des revendications 9 à 12, dans lequel la mémoire non volatile (NVM) comporte une première partie (P10) stockant ladite information d'entité (K2), et une deuxième partie (P20) possédant un contenu modifié avec une troisième entité (K3), la troisième entité incluant une clé de cryptage et/ou une clé de mélange et/ou des bits de configuration d'un circuit logique configurable, la deuxième partie (P2) de la première mémoire (MM) stockant la troisième entité (K3) modifiée avec ladite deuxième entité (K2).

14. Composant selon la revendication 13, comprenant en outre des troisièmes moyens de traitement (MT3) aptes à effectuer un traitement de modification inverse sur le contenu modifié de la deuxième partie de la mémoire non volatile, et les moyens de commande (CPU) sont en outre aptes à activer les troisièmes moyens de traitement avec la troisième entité (K3) délivrée par les deuxièmes moyens de traitement.

15. Composant selon la revendication 14, dans lequel les troisièmes moyens de traitement (MT3) sont structurellement identiques aux premier et deuxième moyens de traitement (MT1, MT2).

16. Composant selon l'une des revendications 9 à 15, dans lequel l'une au moins des entités comporte une clé de cryptage (K, K2, K3) et le moyen de traitement associé est configuré pour mettre en oeuvre un algorithme de décryptage à clé.

17. Composant selon l'une des revendications 9 à 15, dans lequel l'une au moins des entités comporte une clé de cryptage et le moyen de traitement associé comporte un circuit logique (CL) structurellement configurable à l'aide d'au moins une partie de la clé de cryptage.

18. Composant selon l'une des revendications 9 à 17, dans lequel l'une au moins des entités comporte une clé de mélange (K') et le moyen de traitement associé comporte un circuit additionnel (CDS) configuré pour effectuer une opération de mélange inverse.

19. Composant selon l'une des revendications 9 à 18, dans lequel la mémoire non volatile (NVM) est une mémoire du type électriquement programmable et effaçable, ou une mémoire du type FLASH.

20. Carte à puce contenant un composant (CMP) selon l'une des revendications 9 à 19.

## Patentansprüche

1. Gesichertes Verarbeitungsverfahren eines in einer Komponente gespeicherten Inhalts, wobei die Komponente einen ersten Speicher (MM) und einen nicht flüchtigen Speicher (NVM) enthält, wobei der Inhalt eines ersten Teils (P1) des ersten Speichers (MM) Boot-Anweisungen aufweist und gemäß einer Änderungsverarbeitung geändert wurde, die eine erste Entität (K1) verwendet und eine Verschlüsselung und/oder einen Verwürfelungsvorgang umfasst, wobei die erste Entität einen Verschlüsselungsschlüssel und/oder einen Verwürfelungsschlüssel und/oder Konfigurationsbits einer konfigurierbaren Logikschaltung umfasst, und der Inhalt eines zweiten Teils (P2) des ersten Speichers (MM) gemäß einer Änderungsverarbeitung geändert wurde, die eine zweite Entität (K2) verwendet und eine Verschlüsselung und/oder einen Verwürfelungsvorgang umfasst, wobei die zweite Entität einen Verschlüsselungsschlüssel und/oder einen Verwürfelungsschlüssel und/oder Konfigurationsbits einer konfigurierbaren Logikschaltung umfasst, Verfahren, wobei die erste Entität (K1) geheim in einem oder mehreren Registern der Komponente fest gespeichert wird (200), eine für die zweite Entität (K2) repräsentative Entitätsinformation (K2) im nicht flüchtigen Speicher (NVM) an einer Stelle (END) gespeichert wird, die durch eine erste im ersten Teil des ersten Speichers enthaltene Anzeige (INDK2) bezeichnet wird, und wobei beim Einschalten der Komponente eine umgekehrte Änderungsverarbeitung unter Verwendung der ersten Entität (K1) am geänderten Inhalt des ersten Teils (P1) des ersten Speichers (MM) durchgeführt wird, dann nach Erhalt der ersten Anzeige (INDK2) mit der umgekehrten Änderungsverarbeitung die zweite Entität (K2) ausgehend von der im nicht flüchtigen Speicher enthaltenen Entitätsinformation erhalten wird, und eine umgekehrte Änderungsverarbeitung unter Verwendung der zweiten Entität (K2) am geänderten Inhalt des zweiten Teils (P2) des ersten Speichers (MM) durchgeführt wird.

2. Verfahren nach Anspruch 1, wobei die Entitätsinformation die zweite Entität (K2) ist.

3. Verfahren nach Anspruch 1, wobei die Entitätsinformation die mit der ersten Entität geänderte zweite Entität (K1, (K2)) ist, und nach Erhalt der ersten Anzeige an der geänderten Entitätsinformation (K1, (K2)) eine umgekehrte Änderungsverarbeitung unter Verwendung der ersten Entität (K1) durchgeführt wird, um die zweite Entität (K2) zu erhalten.

4. Verfahren nach einem der vorhergehenden Ansprüche, wobei der nicht flüchtige Speicher (NVM) einen ersten Teil (P10), in dem die Entitätsinformation (K2) gespeichert wird, und einen zweiten Teil (P20) besitzt, dessen Inhalt mit einer dritten Entität (K3) geändert wurde, wobei die dritte Entität einen Verschlüsselungsschlüssel und/oder einen Verwürfelungsschlüssel und/oder Konfigurationsbits einer konfigurierbaren Logikschaltung umfasst, und im zweiten Teil (P2) des ersten Speichers (MM) die mit der zweiten Entität geänderte dritte Entität (K2 (K3)) gespeichert wird.

5. Verfahren nach Anspruch 4, wobei nach der Durchführung einer umgekehrten Änderungsverarbeitung unter Verwendung der zweiten Entität (K2) an der geänderten dritten Entität (K2 (K3)) am geänderten Inhalt des zweiten Teils (P20) des nicht flüchtigen Speichers (NVM) eine umgekehrte Änderungsverarbeitung unter Verwendung der dritten Entität (K3) durchgeführt wird.

6. Verfahren nach einem der vorhergehenden Ansprüche, wobei mindestens eine der Entitäten einen Verschlüsselungsschlüssel (K1, K2, K3) aufweist, und die zugeordnete umgekehrte Änderungsverarbeitung eine Entschlüsselungsverarbeitung aufweist.

7. Verfahren nach einem der vorhergehenden Ansprüche, wobei mindestens eine der Entitäten einen Verwürfelungsschlüssel (K1) aufweist, und die zugeordnete umgekehrte Änderungsverarbeitung eine umgekehrte Verwürfelungsverarbeitung aufweist.

8. Verfahren nach den Ansprüchen 6 und 7, wobei mindestens einer der Inhalte sowohl mit einem Verschlüsselungsschlüssel (K) verschlüsselt als auch mit einem Verwürfelungsschlüssel (K') verwürfelt wurde, und die zugeordnete umgekehrte Änderungsverarbeitung eine Entschlüsselungsverarbeitung und eine umgekehrte Verwürfelungsverarbeitung aufweist.

9. Komponente, die einen ersten Speicher (MM), der einen ersten Teil (P1), der einen Inhalt besitzt, der Boot-Anweisungen aufweist und gemäß einer Änderungsverarbeitung geändert ist, die eine erste Entität (K1) verwendet und eine Verschlüsselung und/oder einen Verwürfelungsvorgang umfasst, wobei die erste Entität einen Verschlüsselungsschlüssel und/oder einen Verwürfelungsschlüssel und/oder Konfigurationsbits einer konfigurierbaren Logikschaltung umfasst, und einen zweiten Teil (P2) aufweist, der einen Inhalt besitzt, der gemäß einer Änderungsverarbeitung geändert ist, die eine zweite Entität (K2) verwendet und eine Verschlüsselung und/oder einen Verwürfelungsvorgang umfasst, wobei die zweite Entität einen Verschlüsselungsschlüssel und/oder einen Verwürfelungsschlüssel und/oder Konfigurationsbits einer konfigurierbaren Logikschaltung umfasst, ein oder mehrere Register (MS), die konfiguriert sind, um die erste Entität (K1) geheim fest zu speichern, und einen nicht flüchtigen Speicher (VNM) enthält, der eine für die zweite Entität (K2) repräsentative Entitätsinformation an einer Stelle (END) speichert, die durch eine erste im ersten Teil des ersten Speichers enthaltene Anzeige (INDK2) bezeichnet wird, wobei die Komponente außerdem erste Verarbeitungseinrichtungen (MT1), die beim Einschalten der Komponente eine umgekehrte Änderungsverarbeitung am geänderten Inhalt des ersten Teils des ersten Speichers durchführen können, zweite Verarbeitungseinrichtungen (MT2), die eine umgekehrte Änderungsverarbeitung am Inhalt des zweiten Teils des ersten Speichers durchführen können, und Steuereinrichtungen (CPU) enthält, die konfiguriert sind, um zunächst die ersten Verarbeitungseinrichtungen (MT1) mit der ersten Entität zu aktivieren, dann, um nach der umgekehrten Änderungsverarbeitung an der ersten Anzeige mit der ersten Entität (K1) die zweite Entität (K2) ausgehend von der in einem nicht flüchtigen Speicher enthaltenen Entitätsinformation zu erhalten, und um die zweiten Verarbeitungseinrichtungen (MT2) mit der zweiten Entität zu aktivieren.

10. Komponente nach Anspruch 9, wobei die Entitätsinformation die zweite Entität (K2) ist.

11. Komponente nach Anspruch 9, wobei die Entitätsinformation die mit der ersten Entität (K1) geänderte zweite Entität (K2) ist, wobei die Komponente außerdem Hilfs-Verarbeitungseinrichtungen (MTX) enthält, die strukturell gleich den ersten Verarbeitungseinrichtungen und in der Lage sind, eine umgekehrte Änderungsverarbeitung an der Entitätsinformation durchzuführen, und die Steuereinrichtungen (CPU) außerdem in der Lage sind, nachdem die erste Anzeige erhalten wurde, die Hilfs-Verarbeitungseinrichtungen mit der ersten Entität (K1) zu aktivieren, um die zweite Entität (K2) zu erhalten.

12. Komponente nach einem der Ansprüche 9 bis 11, wobei die ersten und zweiten Verarbeitungseinrichtungen (MT1, MT2) strukturell gleich sind.

13. Komponente nach einem der Ansprüche 9 bis 12, wobei der nicht flüchtige Speicher (NVM) einen ersten Teil (P10), der die Entitätsinformation (K2) speichert, und einen zweiten Teil (P20) aufweist, der einen mit einer dritten Entität (K3) geänderten Inhalt besitzt, wobei die dritte Entität einen Verschlüsselungsschlüssel und/oder einen Verwürfelungsschlüssel und/oder Konfigurationsbits einer konfigurierbaren Logikschaltung umfasst, wobei der zweite Teil (P2) des ersten Speichers (MM) die mit der zweiten Entität (K2) geänderte dritte Entität (K3) speichert.

14. Komponente nach Anspruch 13, die außerdem dritte Verarbeitungseinrichtungen (MT3) enthält, die eine umgekehrte Änderungsverarbeitung am geänderten Inhalt des zweiten Teils des nicht flüchtigen Speichers durchführen können, und wobei die Steuereinrichtungen (CPU) außerdem in der Lage sind, die dritten Verarbeitungseinrichtungen mit der dritten Entität (K3) zu aktivieren, die von den zweiten Verarbeitungseinrichtungen geliefert wird.

15. Komponente nach Anspruch 14, wobei die dritten Verarbeitungseinrichtungen (MT3) strukturell gleich den ersten und zweiten Verarbeitungseinrichtungen (MT1, MT2) sind.

16. Komponente nach einem der Ansprüche 9 bis 15, wobei mindestens eine der Entitäten einen Verschlüsselungsschlüssel (K, K2, K3) aufweist und die zugeordnete Verarbeitungseinrichtung konfiguriert ist, um einen Schlüssel-Entschlüsselungsalgorithmus anzuwenden.

17. Komponente nach einem der Ansprüche 9 bis 15, wobei mindestens eine der Entitäten einen Verschlüsselungsschlüssel aufweist, und die zugeordnete Verarbeitungseinrichtung eine Logikschaltung (CL) aufweist, die mit Hilfe mindestens eines Teils des Verschlüsselungsschlüssels strukturell konfigurierbar ist.

18. Komponente nach einem der Ansprüche 9 bis 17, wobei mindestens eine der Entitäten einen Verwürfelungsschlüssel (K') aufweist, und die zugeordnete Verarbeitungseinrichtung eine zusätzliche Schaltung (CDS) aufweist, die konfiguriert ist, um einen umgekehrten Verwürfelungsvorgang durchzuführen.

19. Komponente nach einem der Ansprüche 9 bis 18, wobei der nicht flüchtige Speicher (NVM) ein Speicher vom elektrisch programmierbaren und löschbaren Typ oder ein Speicher vom Typ FLASH ist.

20. Chipkarte, die eine Komponente (CMP) nach einem der Ansprüche 9 bis 19 aufweist.

## Claims

1. Secure method for processing a content stored within a component, the component comprising a first memory (MM) and a non-volatile memory (NVM), the content of a first portion (P1) of the first memory (MM) comprising boot instructions and having been modified by a modification process using a first entity (K1) and including an encryption and/or a scrambling operation, the first entity including an encryption key and/or a scrambling key and/or bits for configuring a configurable logic circuit, and the content of a second portion (P2) of the first memory (MM) having been modified by a modification process using a second entity (K2) and including an encryption and/or a scrambling operation, the second entity including an encryption key and/or a scrambling key and/or bits for configuring a configurable logic circuit, method in which the said first entity (K1) is hard-coded and stored (200) secretly in one or more registers of the component, an item of entity information (K2) representative of the said second entity (K2) is stored in the said non-volatile memory (NVM) in a location (END) designated by a first indication (INDK2) contained in the said first portion of the first memory, and in which, when the component is powered up, an inverse modification process is applied to the modified content of the first portion (P1) of the first memory (MM) by using the said first entity (K2), then, after the said first indication (INDK2) is obtained with the said inverse modification process, the said second entity (K2) is obtained from the said item of entity information contained in the non-volatile memory and an inverse modification process is applied to the modified content of the second portion (P2) of the first memory (MM) by using the said second entity (K2).

2. Method according to Claim 1, in which the said item of entity information is the second entity (K2).

3. Method according to Claim 1, in which the said item of entity information is the second entity modified with the first entity (K1, (K2)), and, after the said first indication is obtained, an inverse modification process is applied to the said item of modified information (K1 (K2)) by using the first entity (K1) in order to obtain the said second entity (K2).

4. Method according to one of the preceding claims, in which the non-volatile memory (NVM) has a first portion (P10) in which the said item of entity information (K2) is stored, and a second portion (P20) the content of which has been modified with a third entity (K3), the third entity including an encryption key and/or a scrambling key and/or bits for configuring a configurable logic circuit, and the third entity modified with the said second entity (K2 (K3)) is stored in the second portion (P2) of the first memory (MM).

5. Method according to Claim 4, in which, after an inverse modification process has been applied to the said third modified entity (K2 (K3)) by using the second entity (K2), an inverse modification process is applied to the modified content of the second portion (P20) of the non-volatile memory (NVM) by using the third entity (K3).

6. Method according to one of the preceding claims, in which at least one of the entities comprises an encryption key (K1, K2, K3) and the associated inverse modification process comprises a decryption process.

7. Method according to one of the preceding claims, in which at least one of the entities comprises a scrambling key (K1) and the associated inverse modification process comprises a descrambling process.

8. Method according to Claims 6 and 7, in which at least one of the contents has been both encrypted with an encryption key (K) and mixed with a scrambling key (K'), and the associated inverse modification process comprises a decryption process and a descrambling process.

9. Component comprising a first memory (MM) comprising a first portion (P1) having a content comprising boot instructions and modified by a modification process using a first entity (K1) and including an encryption and/or a scrambling operation, the first entity including an encryption key and/or a scrambling key and/or bits for configuring a configurable logic circuit, and a second portion (P2) possessing a content modified by a modification process using a second entity (K2) and including an encryption and/or a scrambling operation, the second entity including an encryption key and/or a scrambling key and/or bits for configuring a configurable logic circuit, one or more registers (MS) configured to store the hard-coded first entity (K1) secretly, a non-volatile memory (VNM) storing an item of entity information representative of the second entity (K2) in a location (END) designated by a first indication (INDK2) contained in the said first portion of the first memory, the component also comprising first processing means (MT1) capable, when the component is powered up, of applying an inverse modification process to the modified content of the first portion of the first memory, second processing means (MT2) capable of applying an inverse modification process to the content of the second portion of the first memory, control means (CPU) configured to activate first the first processing means (MT1) with the first entity, then to obtain, after inverse modification process on the said first indication with the said first entity (K2), the second entity (K2) from the first item of entity information contained in a non-volatile memory and to activate the second processing means (MT2) with the second entity.

10. Component according to Claim 9, in which the said item of entity information is the second entity (K2).

11. Component according to Claim 9, in which the said item of entity information is the second entity (K2) modified with the first entity (K1), the component also comprising auxiliary processing means (MTX) structurally identical to the first processing means and capable of applying an inverse modification process to the said item of entity information, and the control means (CPU) are also capable, after having obtained the said first indication, of activating the auxiliary processing means with the first entity (K1) so as to obtain the said second entity (K2).

12. Component according to one of Claims 9 to 11, in which the first and second processing means (MT1, MT2) are structurally identical.

13. Component according to one of Claims 9 to 12, in which the non-volatile memory (NVM) comprises a first portion (P10) storing the said item of entity information (K2), and a second portion (P20) having a content modified with a third entity (K3), the third entity including an encryption key and/or a scrambling key and/or bits for configuring a configurable logic circuit, the second portion (P2) of the first memory (MM) storing the third entity (K3) modified with the said second entity (K2).

14. Component according to Claim 13, also comprising third processing means (MT3) capable of applying an inverse modification process to the modified content of the second portion of the non-volatile memory, and the control means (CPU) are also capable of activating the third processing means with the third entity (K3) delivered by the second processing means.

15. Component according to Claim 14, in which the third processing means (MT3) are structurally identical to the first and second processing means (MT1, MT2).

16. Component according to one of Claims 9 to 15, in which at least one of the entities comprises an encryption key (K, K2, K3) and the associated processing means is configured to apply a key decryption algorithm.

17. Component according to one of Claims 9 to 15, in which at least one of the entities comprises an encryption key and the associated processing means comprises a logic circuit (CL) that can be structurally configured with the aid of at least a portion of the encryption key.

18. Component according to one of Claims 9 to 17, in which at least one of the entities comprises a scrambling key (K') and the associated processing means comprises an additional circuit (CDS) configured to apply a descrambling operation.

19. Component according to one of Claims 9 to 18, in which the non-volatile memory (NVM) is a memory of the electrically programmable and erasable type, or a FLASH memory.

20. Smart card containing a component (CMP) according to one of Claims 9 to 19.
